Europäisches Patentamt

European Patent Office

Office européen des brevets

(11) Publication number: **0 451 607 A2**

# EUROPEAN PATENT APPLICATION

(21) Application number: **91104753.8**

(22) Date of filing: **26.03.91**

(51) Int. Cl.5: **G01S 5/14**

(30) Priority: **11.04.90 JP 94072/90**

(43) Date of publication of application:
**16.10.91 Bulletin 91/42**

(84) Designated Contracting States:
**DE FR GB**

(71) Applicant: **PIONEER ELECTRONIC CORPORATION**
**No. 4-1, Meguro 1-chome**
**Meguro-ku Tokyo 153(JP)**

(72) Inventor: **Ando, Hitoshi, c/o Pioneer Electronic Corporation**
**Kawagoe Kojo, 25-1, Aza Nishimachi, Oaza Yamada**
**Kawagoe-shi, Saitama 350(JP)**

(74) Representative: **Reinhard, Skuhra, Weise**
**Friedrichstrasse 31**
**W-8000 München 40(DE)**

(54) **Satellite signal acquisition system for GPS receiver.**

(57) In a GPS receiver for receiving satellite signals from a plurality of GPS satellites with a receiving channel by time-division multiplexing, a satellite signal acquisition system, wherein it is determined whether or not almanac data collected and stored in the GPS receiver is outdated over a predetermined period of time upon supplying power to the GPS receiver, the orbital positions of the GPS satellites are calculated only when the almanac data is determined as being updated before elapsing the predetermined period of time, and then the GPS satellites to acquire are determined in accordance with a resultant of the orbital calculation for providing expeditious acquisition of satellite signals. Further, by selecting a number of GPS satellites in acquisition to be a maximum of receivable GPS satellites, a combination of GPS satellites which yields the least error in positioning, or a combination of GPS satellites which provides the minimum PDOP can be attained.

FIG.2

## 1. Field of the Invention

This invention relates to a system for acquiring satellite signals from artificial satellites and more particularly, to a system for acquiring satellite signals for a Global Positioning System (GPS) receiver to determine a position of a user terminal in accordance with a satellite-based position determining system, such as a GPS system.

## 2. Description of the Prior Art

To determine a fix of a user terminal by utilizing GPS satellites, at least three GPS satellites, or preferably four GPS satellites, are necessary. In order to find out the optimum GPS satellites for positioning, an approximate orbital position of each GPS satellite is firstly calculated based on almanac data (containing historical data for locating approximate orbital positions of the all GPS satellites) collected and stored in a GPS receiver during the last contact, an approximate present position and time, and then the user may infer a constellation of GPS satellites which are acquisitive.

In theory, it is possible to utilize the almanac data regardless of its collected time, however, outdated almanac data may cause problems because of the fact that the operating condition of GPS satellites as well as the orbital position of the GPS satellites might have changed with the lapse of time. That is, the GPS receiver may fail to receive a satellite signal from a GPS satellite which is supposed to be in acquisition according to the stored almanac data or it may receive a satellite signal from a GPS satellite which is supposed to be not in acquisition according to the stored almanac data. Particularly, in a vehicle-mounted GPS receiver, it is not so seldom to leave the GPS receiver for a long period of time without using it. This often results in the problems as described above. Accordingly, in the prior art system, at the initial stage of initial acquisition, all the GPS satellites, including the GPS satellites which are not visible from the site of the user judging from the orbital position calculation, have been searched for until the maximum number of GPS satellites for the GPS receiver is acquired.

In prior art GPS receivers, especially, in a low-cost civilian GPS receiver, an expensive hardware construction, such as providing the GPS receiver with a single receiving channel for each GPS satellite, has not been employed in view of manufacturing cost, miniaturization and accuracy. To this end, the prior art GPS receiver has been provided with a number of channels less than the GPS satellites in contact. For example, in the most simple way, a single receiving channel has been provided for receiving satellite signals sequentially from a plurality of GPS satellites, which are necessary for positioning, in accordance with a time-division multiplex system. In this type of sequential GPS receiver, if it is searched for that the GPS satellites including the invisible GPS satellites from the site of the receiver, it takes considerable time in acquisition of signals, thus resulting in the delay of signal tracking as well as position-fixing.

It is therefore an object of this invention to eliminate the problems encountered in the prior art system, and to provide a satellite signal acquisition system for a GPS receiver wherein the GPS satellites determined by the orbital calculation based on the almanac data collected and stored in the GPS receiver are searched for only when the almanac data stored in the GPS receiver is evaluated to be reliable in view of updating.

## SUMMARY OF THE INVENTION

In a GPS receiver for receiving satellite signals from a plurality of GPS satellites with a receiving channel by time-division multiplexing, a satellite signal acquisition system, wherein it is determined whether or not almanac data collected and stored in the GPS receiver is outdated over a predetermined period of time upon supplying power to the GPS receiver, the orbital positions of the GPS satellites are calculated only when the almanac data is determined as being updated within the predetermined period of time, and then the GPS satellites to acquire are determined based on a resultant of the orbital calculation.

Upon initiation of the GPS receiver, if the almanac data collected and stored in the GPS receiver is determined as being outdated over the predetermined period of time, the reliability of the almanac data is considered to be quite low. Therefore, only when the almanac data is determined as being updated within the predetermined period of time, the almanac data collected and stored in the GPS receiver is considered effective for calculating the orbits of the GPS satellites, thus determining the GPS satellites to acquire based on the calculated orbits of the orbiting GPS satellites.

Accordingly, the determined or selected GPS satellites can be acquired expeditiously in contrast with the prior art acquisition system, wherein however the acquisition of the target GPS satellites is attempted, it may fail since the orbital position of the GPS satellites as well as their operating condition may have changed from those obtained based on the outdated almanac data.

Further, to determine the optimum target GPS satellite, it is preferable to select the GPS satellites from the one orbiting at the highest elevation in order, since the GPS satellites having high elevation angles or satellite signals transmitted from GPS satellites orbiting at high elevation angles are hard to be blocked by buildings and the like. To select a minimum number of target GPS satellites, for example, If the minimum of three GPS satellites are selected to determine a two-dimensional fix, and that a minimum of four GPS satellites are selected to determine a three-dimensional fix, the acquisition of the selected GPS satellites may be expedited more effectively.

Still further, by selecting a number of GPS satellites in acquisition to be the maximum GPS satellites, signals from which are receivable by the GPS receiver, a combination of GPS satellites which yields the least error in positioning or a combination of GPS satellites which provides the minimum Position Dilution of Precision (PDOP) can be obtained, and all that the acquired GPS satellite not in use for positioning may be utilized as a back-up GPS satellite in case of an emergency.

## BRIEF DESCRIPTION OF THE DRAWINGS

Fig. 1 is a flowchart showing operational steps to be performed by an embodiment of this invention; and
Fig. 2 is a block diagram of a GPS receiver embodying the present invention.

## DETAILED DESCRIPTION OF THE PREFERRED EMBODIMENT

A preferred embodiment of this invention will be described hereinafter with reference to the accompanying drawings.

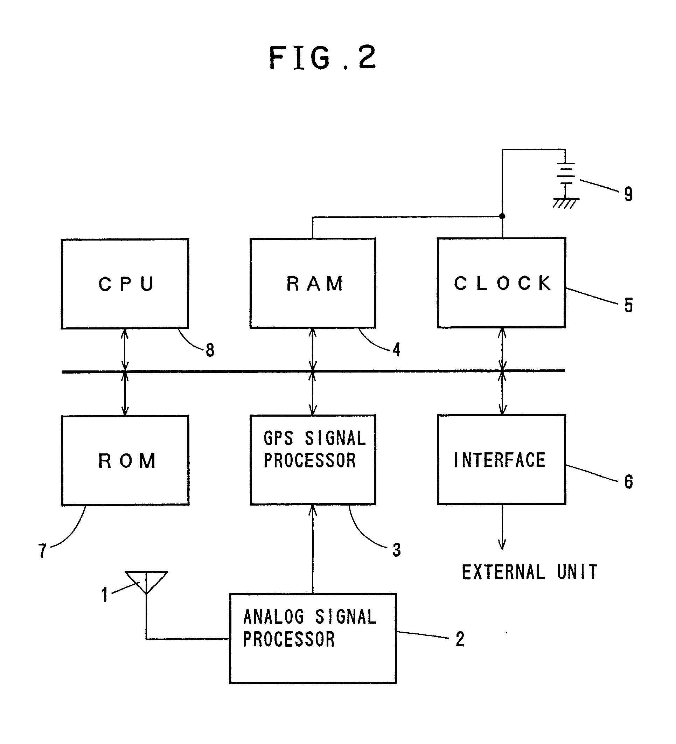

Referring first to Fig. 2, there is shown a GPS receiver embodying the present invention, wherein an element 1 denotes a GPS antenna mounted on a roof of a motor vehicle, a block 2 denotes an analog signal processor for amplifying a GPS signal received by the GPS antenna 1 and outputting a frequency-converted signal therefrom, a block 3 denotes a GPS signal processor consisting of a digital signal processor for recovering the original transmission data by despreading and demodulating the received signal fed from the analog signal processor 2, a block 4 denotes a nonvolatile memory made up of a Random Access Memory (RAM) for storing data, a block 5 denotes a clock having a calender function, a block 6 denotes an interfacing unit for interfacing the GPS receiver with an external unit, such as a motor vehicle-mounted navigation device, so as to output a resultant of GPS measurement, a block 7 denotes a Read Only Memory (ROM) for storing a control program, and a block 8 denotes a Central Processing Unit (CPU) for controlling the system and implementing the position determining calculation.

In the GPS receiver described above, the RAM 4 and the clock 5 are backed up by a battery at the time when the power supply to the GPS receiver is turned off for protecting the stored data in the RAM 4 from losing as well as the clock from out of timing.

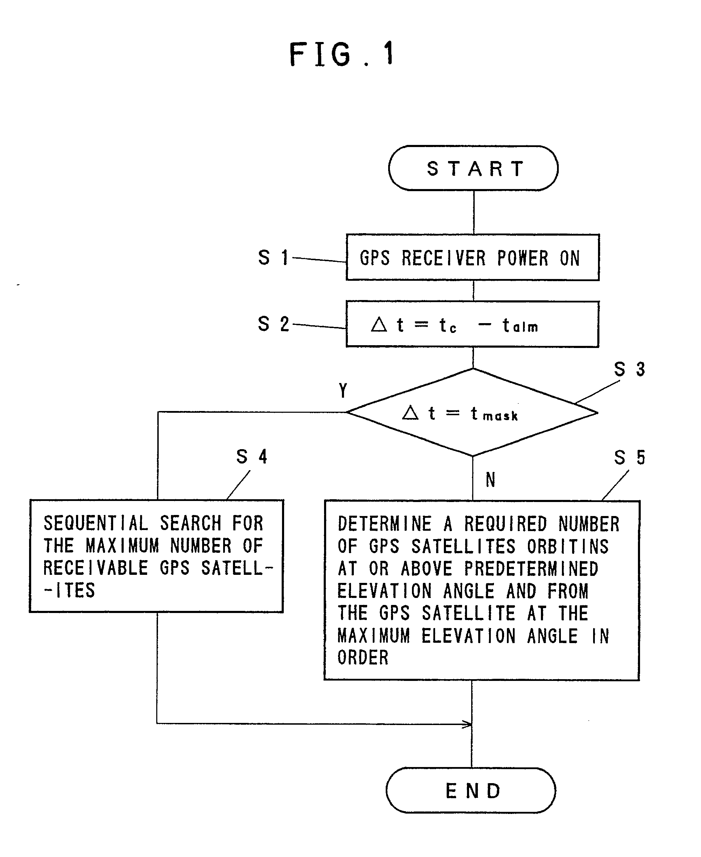

Operation of the acquisition of GPS satellites in accordance with the present invention will be explained hereinafter in detail by referring to the flowchart shown in Fig. 1.

Upon turning on the GPS receiver (step S1), the CPU 8 reads the current time $t_c$ from the clock 5 and that a time $t_{alm}$, from the RAM 4, when the almanac data is collected and stored in the previous operation, and then calculating a time difference therebetween $\Delta t = t_c - t_{alm}$ (step S2). Following this step S2, a resultant $\Delta t$ is compared with a predetermined period of time $t_{mask}$ (step S3) for determining which is greater in length. The predetermined period of time $t_{mask}$ is a threshold value for determining whether or not the almanac data collected and stored in the GPS receiver is updated. The updated almanac data can be used for calculating the orbits of GPS satellites, whereas $t_{mask}$ = 21 days (= three weeks) may be adopted for the predetermined period of time $t_{mask}$.

Accordingly, if it is determined at step S3 that $\Delta t > t_{mask}$, or the almanac data stored in the RAM 4 is not updated, the program goes to step S4, and thereby performing the sequential search for all the GPS satellites until a number of acquired GPS satellites reaches to the maximum receivable number of the GPS satellites for the GPS receiver.

On the other hand, if it is determined at step S3 that $\Delta t \leq t_{mask}$, or the almanac data stored in the RAM 4 is reliable as it is updated within the predetermined period of time, the program goes to step S5, and thereby calculating the orbits of the GPS satellites based on the almanac data collected and stored in the RAM 4, positional data of the present position and the current time read from the clock 5, thus determining approximate orbital positions of all GPS satellites. Following to this approximation, a required number of GPS satellites is selected starting from the GPS satellite having the maximum elevation angle in order and performed is a sequential search for all the selected GPS satellites. In like way, the search is performed only for the selected GPS satellites at high elevation angles, the acquisition of the selected GPS satellites will be performed within a very short period of time.

To calculate approximate orbital positions of the GPS satellites, the positional data of the present GPS receiver site is necessary, however, which positional data may be provided, for example, by entering the longitude and latitude of Tokyo into the RAM 4, at the time of setting the GPS receiver, as the present positional data for any location within Japan. It is because that the only required positional data for the GPS receiver in the initial acquisition is to enter rough positional data such as described above.

Upon completion of the acquisition of the selected number of the GPS satellites, the CPU 8 implements the position determining calculation based on ephemeris data transmitted by each acquired GPS satellite, and then calculated position data is transmitted to the external unit, such as a navigation device equipped with a CRT display and combined with a Compact Disk - Read Only Memory (CD-ROM) for mapping, through the interfacing unit 6 for indicating the present position on a displayed map.

As it is obvious from the description above, in accordance with the satellite signal acquisition system embodying the present invention, the initial acquisition of the satellite signals is performed with expedition upon initiation of the GPS receiver, thus resulting in the expeditious start of positioning by the GPS satellites.

I will be apparent from the foregoing description and drawings that modifications may be made without departing from the spirit and scope of this invention. Accordingly, the present invention is not to be considered to be limited to the specific embodiment illustrated, except insofar as may be required by the following claims.

## Claims

1.  In a Global Positioning System (GPS) receiver for receiving satellite signals from a plurality of satellites with a receiving channel by time-division multiplexing, a satellite signal acquisition system comprising:

    determining means for determining, upon supplying power to the GPS receiver, whether or not almanac data collected and stored in the GPS receiver is outdated over a predetermined period of time;

    calculating means for calculating the orbital position of the satellites based on said collected and stored almanac data only when it is updated within said predetermined period of time; and

    determining means for determining satellites to acquire in accordance with a resultant calculated by said calculating means.

2.  A satellite signal acquisition system as defined in claim 1, wherein said determining means determines satellites to acquire from the satellite orbiting at the highest elevation angle in order.

3.  A satellite signal acquisition system as defined in claim 2, wherein said determining means determines a number of satellites to acquire on the basis of a minimum of orbiting satellites required for positioning.

4.  A satellite signal acquisition system as defined in claim 2, wherein said determining means determines a number of satellites to acquire on the basis of a maximum of orbiting satellites receivable by the GPS receiver.

# FIG.1

START

S 1 — GPS RECEIVER POWER ON

S 2 — $\triangle t = t_c - t_{alm}$

S 3 — $\triangle t = t_{mask}$

Y

N

S 4 — SEQUENTIAL SEARCH FOR THE MAXIMUM NUMBER OF RECEIVABLE GPS SATELL--ITES

S 5 — DETERMINE A REQUIRED NUMBER OF GPS SATELLITES ORBITINS AT OR ABOVE PREDETERMINED ELEVATION ANGLE AND FROM THE GPS SATELLITE AT THE MAXIMUM ELEVATION ANGLE IN ORDER

END

# FIG.2